# EUROPÄISCHE PATENTSCHRIFT

(11) **EP 2 226 174 B1**
(45) Veröffentlichungstag und Bekanntmachung des Hinweises auf die Patenterteilung: **09.05.2018**
(21) Anmeldenummer: 10155414.5
(22) Anmeldetag: 04.03.2010
(51) Int. Cl.: B29C 45/14

(54) **Herstellung eines Kunststoffteils**
Production of a plastic part
Fabrication d'une partie en plastique

(30) Priorität: 04.03.2009 DE 102009011826
(43) Veröffentlichungstag der Anmeldung: 08.09.2010
(73) Patentinhaber: BLASE GmbH & Co. KG, 32312 Lübbeke (DE)
(72) Erfinder: Struckmeier, Thomas, 32312, Lübbecke (DE)
(74) Vertreter: Ter Meer Steinmeister & Partner

(56) Entgegenhaltungen:
- EP-A1- 1 647 385
- EP-A1- 1 857 268
- JP-A- 5 147 075

## Beschreibung

Die Erfindung betrifft ein Verfahren zur Herstellung eines Kunststoffteils, insbesondere ein In-Mould-Decoration-Verfahren.

Herkömmliche In-Mould-Decoration-Verfahren dienen beispielsweise zum Aufbringen einer farbigen und abriebfesten Beschichtung auf Kunststoffteile. In einem derartigen Verfahren wird beispielsweise eine Transferfolie, auf die eine Farbschicht aufgebracht ist, innerhalb eines geöffneten Formwerkzeugs angeordnet. Das Formwerkzeug wird dann geschlossen, und es wird Kunststoff eingespritzt, so daß sich die Farbschicht mit dem erhaltenen Kunststoffteil verbindet. Das Formwerkzeug wird dann geöffnet, und die Transferfolie löst sich von dem erhaltenen Kunststoffteil ab. Anschließend wird auf die Farbschicht eine Schutzschicht aufgebracht, beispielsweise durch Überlackieren des Kunststoffteils, um eine abriebfeste Beschichtung zu erhalten.

Es ist auch bekannt, Kunststoffteile nach einem Film-Insert-Molding-Verfahren herzustellen. Dabei wird beispielsweise eine bedruckte Folieneinlage in eine Spritzgußform eingelegt und mit Kunststoff hinterspritzt. Die Folie bildet dann die Oberfläche des erhaltenen Kunststoffteils. Nachteilig sind hier die vergleichsweise hohen Materialkosten der Folie, um eine qualitativ hochwertige Materialoberfläche zu erhalten.

EP 1 857 268 A1 beschreibt ein In-Mould-Decoration-Verfahren, bei der eine Transferfolie, auf der eine Designschicht aufgebracht ist, innerhalb eines geöffneten Formwerkzeugs angeordnet wird und Kunststoff an die mit einer Adhäsionsschicht versehene Designschicht angespritzt wird. Die Transferfolie wird zwischen einem unbeweglichen Formteil und einem beweglichen Formteil durch das Formwerkzeug hindurchgeführt und so positioniert, dass ein transparenter Kunstharz in einem Formhohlraum an ein Design der Transferfolie angespritzt werden kann. Das geformte Produkt umfasst das Design, welches von einer Basisschicht der Transferfolie abgelöst wird. Das geformte Produkt wird aus der Form entnommen.

EP 1 647 385 A1 beschreibt ein In-Mould-Decoration-Verfahren, bei dem eine dekorative Schicht auf einer Rückseite einer transparenten Blende hergestellt wird. Nachdem eine Beschichtung und die dekorative Schicht im Formwerkzeug von einer Transferfolie auf einen angeformten transparenten Körper übertragen wurden, werden die Basisschicht und die Ablöseschicht der Transferfolie abgelöst und entfernt.

Aufgabe der Erfindung ist es, ein Verfahren zur Herstellung eines Kunststoffteils zu schaffen, mit dem mit einem Druckbild versehene Kunststoffteile mit hochwertiger Oberfläche kostengünstig und in rationaler Weise einschließlich einer rückseitigen Schutzfolie hergestellt werden können.

Diese Aufgabe wird erfindungsgemäß durch ein Verfahren nach Anspruch 1 zur Herstellung eines Kunststoffteils in Form einer Blende für ein Gerät, mit einer von einer transparenten Kunststoffschicht bedeckten, durch die transparente Kunststoffschicht sichtbaren Farbschicht gelöst.

Bei dem Kunststoffteil handelt es sich um eine Blende eines Geräts. Bei derartigen Kunststoffteilen ist häufig eine Beschriftung oder Kennzeichnung mit Symbolen erwünscht, die vor Abrieb und Berührung geschützt sein soll.

Erfindungsgemäß bildet die transparente Kunststoffschicht eine Produktoberfläche, d.h. die einem Benutzer zugewandte Seite des Kunststoffteils. Sie schützt somit die dahinterliegende Farbschicht vor Abrieb kann eine Beständigkeit gegenüber Wasser, Fetten und schwachen Säuren bewirken. Sie bildet somit einen Berührungsschutz für die Farbschicht. Auf das Aufbringen einer zusätzlichen Lackschicht nach dem Entformen des Kunststoffteils kann daher verzichtet werden. Gegenüber einem herkömmlichen In-Mould-Decoration-Verfahren ergibt sich somit eine beträchtliche Einsparung von Produktionszeit und Kosten. Gegenüber dem bekannte Verfahren des Film-Insert-Molding ergibt sich eine erhebliche Kostenersparnis, da als Transferfolie wesentlich preiswertere Folientypen eingesetzt werden können, als solche, die sich als Folieneinlage eignen, welche zugleich die Produktoberfläche bilden sollen.

Der Schichtaufbau kann aus mehreren Schichten, beispielsweise Farbschichten oder Lackschichten bestehen. Der Schichtaufbau kann beispielsweise lediglich bereichsweise auf der Transferfolie aufgebracht werden.

Die Kunststoffschicht ist insbesondere wenigstens im Bereich der Farbschicht transparent.

Das Anspritzen der transparenten Kunststoffschicht erfolgt an diejenige Seite der Transferfolie, auf der sich der Schichtaufbau befindet.

Die Verwendung einer Transferfolie zum Übertragen beispielsweise einer Farbschicht auf ein angespritztes Kunststoffteil, wobei die Transferfolie nachfolgend von dem erhaltenen Kunststoffteil abgelöst wird, ist an sich bereits aus einem herkömmlichen In-Mould-Decoration-Verfahren bekannt. Die Farbschicht ist vorzugsweise ausreichend temperaturbeständig, um nicht beim Anspritzen der transparenten Kunststoffschicht übermäßig zu verwischen. Gegebenenfalls kann die Farbschicht durch eine oder mehrere weitere Schichten des Schichtaufbaus vor Verwischen geschützt werden. Die notwendige Temperaturbeständigkeit der Druckfarbe hängt dabei von den Prozeßparametern ab, wie beispielsweise der Massetemperatur der eingespritzten Kunststoffmasse und der Zeitdauer des Anspritzvorgangs. So kann beispielsweise die Farbschicht eine höhere Glasübergangstemperatur aufweisen als ein zum Herstellen der Kunststoffschicht verwendetes Kunststoffmaterial.

Als Transferfolie ist beispielsweise eine Polyesterfolie mit einer Dicke vorzugsweise im Bereich von 0,1 bis 0,25 mm geeignet.

Das Material der transparenten Kunststoffschicht ist vorzugsweise ein thermoplastischer Kunststoff, beispielsweise ein Acrylat oder Polycarbonat.

Vor dem Schritt des Anspritzens wird die Transferfolie mit der Farbschicht in ein Formwerkzeug eingebracht, und das Formwerkzeug wird verschlossen. Nach dem Anspritzen der Kunststoffschicht wird das Formwerkzeug geöffnet.

Beispielsweise ist die Transferfolie an dem erhaltenen Kunststoffteil im wesentlichen durch Adhäsion gehalten. Dadurch ist sie leicht ablösbar.

Die Transferfolie benötigt lediglich einseitig eine mit dem Schichtaufbau versehbare, beispielsweise bedruckbare Oberfläche. Je nach zu verwendenden Materialien des Schichtaufbaus, insbesondere einer Druckfarbe, kann eine Transferfolie mit geeigneter spezifischer Oberflächenenergie (Oberflächenspannung) gewählt werden. Es kann auch eine Oberflächenbehandlung der Transferfolie vor dem Aufbringen des Schichtaufbaus vorgesehen sein, beispielsweise eine Niederdruckplasma- oder eine Korona-Behandlung.

Die Transferfolie kann beispielsweise mit einer Haftvermittlerschicht versehen werden, oder sie kann durch ein Coextrudat mit wenigstens einer adhäsiven Außenschicht gebildet sein. Somit kann die Transferfolie einen mehrschichtigen Aufbau haben.

Bei dem erfindungsgemäßen Verfahren verbleibt die Transferfolie als Schutzfolie an dem erhaltenen Kunststoffteil. So kann die Transferfolie beispielsweise als Schutzfolie bis zur Weiterverarbeitung des erhaltenen Kunststoffteils an dem Kunststoffteil verbleiben.

Weitere vorteilhafte Ausgestaltungen der Erfindung ergeben sich aus den Unteransprüchen.

Vorzugsweise wird der Schichtaufbau durch Bedrucken der Transferfolie aufgebracht, beispielsweise im Siebdruckverfahren. Dadurch läßt sich der Schichtaufbau in rationeller Weise auf die Folie aufbringen.

Beispielsweise kann vor, gleichzeitig mit oder nach dem Anspritzen ein Element der Transferfolie abgetrennt werden, beispielsweise ausgetrennt werden. So kann beispielsweise die transparente Kunststoffschicht lediglich an den Schichtaufbau auf einem abgetrennten Element der Transferfolie angespritzt werden. Das Abtrennen kann beispielsweise mittels Ausstanzen oder Schneiden erfolgen.

Beispielsweise ist der Schichtaufbau vor dem Anspritzen der transparenten Kunststoffschicht getrocknet.

Beim Anspritzen der Kunststoffschicht an den Schichtaufbau kann die Farbschicht beispielsweise erweichen oder leicht anschmelzen, so daß eine besonders innige Verbindung mit der Kunststoffschicht erreicht wird. Der Schichtaufbau weist zumindest bereichsweise eine Lackschicht auf. Die Lackschicht kann beispielsweise farblos oder transparent sein. Die Lackschicht kann beispielsweise die Farbschicht auf der Transferfolie bedecken.

Beispielsweise kann in dem Schritt des Aufbringens des Schichtaufbaus eine Lackschicht des Schichtaufbaus zwischen der Transferfolie und der wenigstens einen Farbschicht angeordnet werden. Das heißt, dort, wo die Lackschicht vorhanden ist, trennt sie die Farbschicht von der Transferfolie. Erfindungsgemäß wird in dem Schritt des Aufbringens des Schichtaufbaus eine Lackschicht in Bereichen auf die Transferfolie aufgebracht welche Bereiche freigelassenen Bereichen in der wenigstens einen Farbschicht entsprechen. Das heißt, eine Lackschicht wird in Fenstern der Farbschicht aufgebracht. Diese Lackschicht kann beispielsweise vor oder nach dem Drucken der Farbschicht aufgebracht werden. Erfindungsgemäß ist die Transferfolie mitsamt wenigstens einer Lackschicht des Schichtaufbaus von dem erhaltenen Kunststoffteil ablösbar.

Vorzugsweise besteht der Schichtaufbau aus wenigstens einer bedruckten Farbschicht und wenigstens einer Lackschicht.

Eine Lackschicht oder Lackschichten des Schichtaufbaus und/oder eine Farbschicht oder Farbschichten des Schichtaufbaus können beispielsweise mitttels Bedrucken auf die Folie aufgebracht werden, beispielsweise im Siebdruckverfahren.

Erfindungsgemäß verbleibt zumindest die wenigstens eine Farbschicht des Schichtaufbaus beim Ablösen der Transferfolie an dem erhaltenen Kunststoffteil. Gegenstand der Erfindung ist weiter ein Kunststoffteil in Form einer Blende für ein Gerät, gemäß den Merkmalen des Anspruchs 6. Ein derartiges Kunststoffteil kann in vorteilhafter Weise durch das erfindungsgemäße Verfahren hergestellt werden, wie oben beschrieben wurde. Dabei bildet die Transferfolie die Schutzfolie.

Vorzugsweise ist die ablösbare Schutzfolie im wesentlichen durch Adhäsion gehalten.

Bevorzugte Ausführungsbeispiele der Erfindung werden im folgenden anhand der Zeichnung näher erläutert. Die Figuren 1,2,3,7,8,9 und 10 zeigen Ausführungsformen, die nicht gemäß der Erfindung sind.

Es zeigen:
- Fig. 1: eine Transferfolie mit einer Farbschicht;
- Fig. 2: die Transferfolie, bei der an die Farbschicht eine Kunststoffschicht angespritzt ist;
- Fig. 3: ein nach dem Ablösen der Transferfolie erhaltenes Kunststoffteil;
- Fig. 4: eine Transferfolie mit einer Farbschicht entsprechend Fig. 1, mit einem Fenster in der Farbschicht;
- Fig. 5: eine Transferfolie mit Farbschicht mit Fenster und einer Lackschicht in dem Fenster;
- Fig. 6: die Transferfolie mit Farb- und Lackschicht aus Fig. 5 mit angespritzter transparenter Kunststoffschicht;
- Fig. 7: das daraus nach Ablösen der Transferfolie erhaltene Kunststoffteil;
- Fig. 8: eine Transferfolie mit einem Schichtaufbau aus einer Lackschicht und einer Farbschicht;
- Fig. 9: den Schichtaufbau aus Fig. 8 mit angespritzter transparenter Kunststoffschicht und abgelöster Transferfolie; und
- Fig. 10: einen Schichtaufbau mit angespritzter Kunststoffschicht ähnlich Fig. 9, wobei die Lackschicht an der abgelösten Transferfolie verbleibt.

Die Figuren zeigen schematisch Ausführungsformen und Verfahrensschritte. Die Darstellung ist nicht maßstäblich.

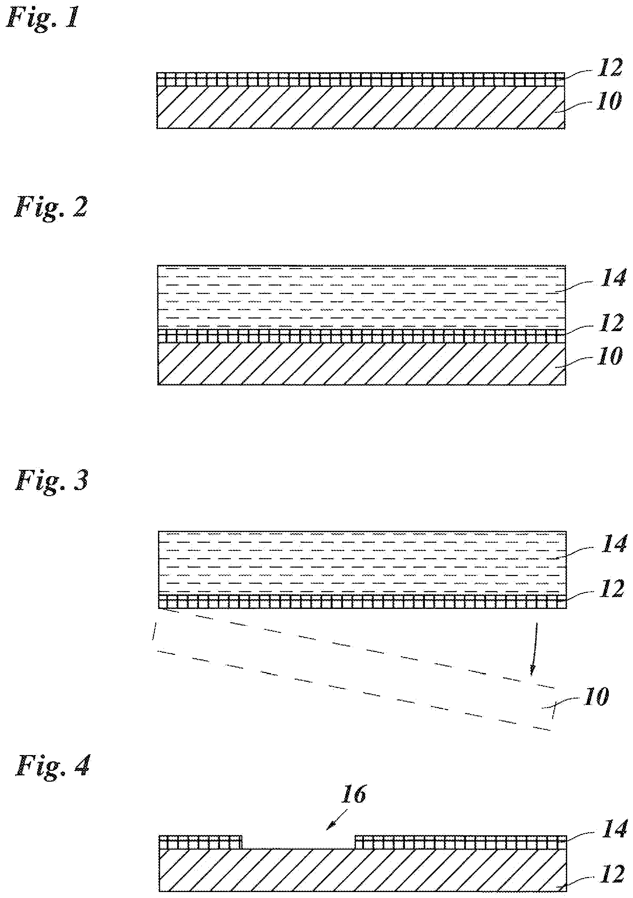

Die Fig. 1 bis 3 zeigen ein erstes Ausführungsbeispiel.

Eine Transferfolie 10 wird mit einer Farbschicht 12 bedruckt. Bei der Transferfolie 10 handelt es sich beispielsweise um eine Polyesterfolie. Sie hat beispielsweise eine Stärke von 250 *µ*m und ist beidseitig glatt. Eine derartige Folie kann beispielsweise unter der Bezeichnung Melinex von der Firma Cadillac bezogen werden.

Die Farbschicht 10 wird beispielsweise im Siebdruckverfahren aufgebracht. Die Druckfarbe ist beispielsweise lösemittelhaltig. Die Farbe ist beispielsweise eine herkömmliche Siebdruckfarbe. Eine geeignete Farbe kann beispielsweise unter der Serienbezeichnung 347-00 von der Firma Printcolor bezogen werden und kann Farbzusatzmittel enthalten wie beispielsweise einen Flexibilisierungsbinder und einen Verdünner, die beispielsweise unter den Serienbezeichnungen 386-07 bzw. 300-017 von der Firma Printcolor erhältlich sind. Die Druckfarbe wird beispielsweise mittels eines Siebdruckgewebes 120/34 in an sich bekannter Weise im Siebdruckverfahren auf die Transferfolie 10 gedruckt.

Es werden beispielsweise mehrere Nutzen auf eine Folienbahn gedruckt und ausgestanzt.

Der ausgestanzte Nutzen wird in die geöffnete Spritzgußform eingelegt, die Spritzgußform wird geschlossen, und der Spritzvorgang wird ausgelöst. Dabei wird eine transparente Kunststoffschicht 14 an die Farbschicht 12 des Nutzens angespritzt (Fig. 2). Das Material der Kunststoffschicht ist beispielsweise Polymethylmethacrylat (PMMA) und ist beispielsweise glasklar. PMMA glasklar ist beispielsweise unter dem Handelsnamen Plexiglas bei der Firma Evonik erhältlich. Die Formmasse wird beispielsweise bei einer Massetemperatur im Bereich von 200 bis 240° C eingespritzt, insbesondere beispielsweise 225° C. Die Werkzeugtemperatur des Formwerkzeugs liegt beispielsweise im Bereich von 20 bis 90° C, insbesondere im Bereich von 50 bis 70° C. Die Einspritzzeit beträgt beispielsweise 1,2 Sekunden.

Nach einer Kühlzeit von beispielsweise 15 Sekunden wird die Spritzgußform geöffnet, und das erhaltene Kunststoffteil wird entnommen. Die Transferfolie 10 wird beispielsweise nach dem Abkühlen des Kunststoffteils abgezogen (Fig. 3). Die verwendete Polyesterfarbe ist ausreichend temperaturstabil und hat eine ausreichend hohe Oberflächenspannung, um sich nach dem Anspritzen der Kunststoffschicht 14 gut von der Farbschicht 12 und dem Kunststoffteil ablösen zu lassen. Die verwendete Siebdruckfarbe hat eine ausreichend hohe Glasübergangstemperatur, um sich während des Spritzvorgangs nicht zu verflüssigen bzw. mit dem Material der Kunststoffschicht 14 zu vermischen. Dadurch kann das Druckbild, beispielsweise ein Druckmotiv, der Farbschicht 12 auf die Kunststoffschicht 14 übertragen werden.

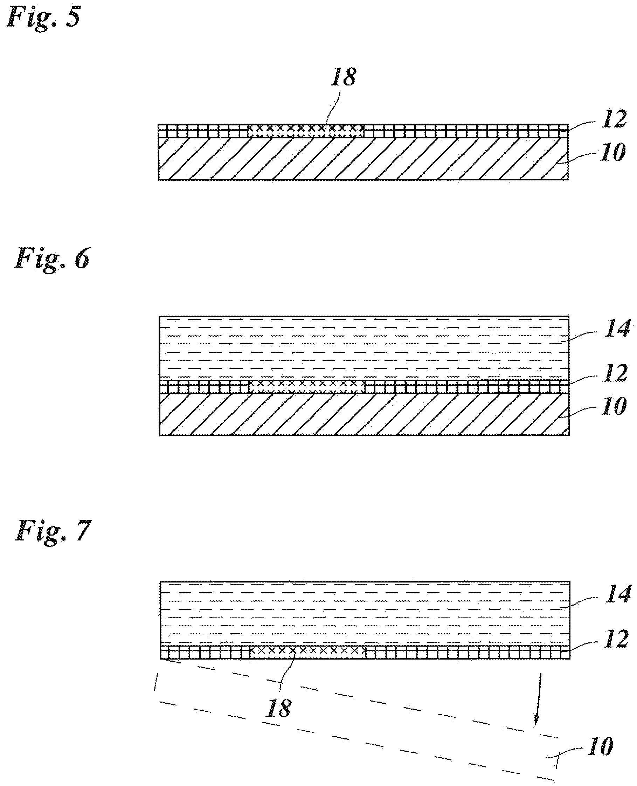

Fig. 4 zeigt ein Ausführungsbeispiel der Erfindung einer Transferfolie 10 mit einer Farbschicht 12, die mindestens ein Fenster 16 bildet, d. h. einen Bereich, in welchem die Farbschicht 12 nicht gedruckt ist. In der weiteren Verarbeitung entspricht dieses Ausführungsbeispiel im wesentlichen dem bereits beschriebenen gemäß Fig. 1 bis 3. Im Bereich des Fensters 16 wird ein Trennlack 18 aufgebracht beispielsweise ebenfalls im Siebdruckverfahren (Fig. 5).

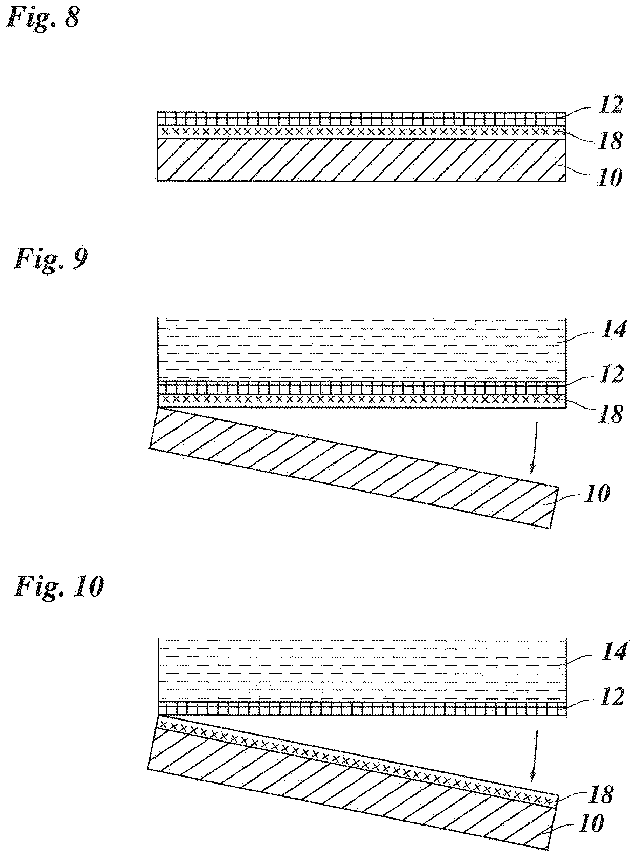

Fig. 8 zeigt ein weiteres Ausführungsbeispiel mit einem Schichtaufbau, bestehend aus einer Lackschicht 18 des Trennlacks und einer Farbschicht 12, die durch den Trennlack von der Transferfolie 10 getrennt ist. Nach dem Anspritzen der Kunststoffschicht 14 kann die Transferfolie 10 von dem erhaltenen Kunststoffteil abgelöst werden, wobei die Farbschicht 12 und die Lackschicht 18 an der Kunststoffschicht 14 verbleiben, wie in Fig. 9 dargestellt ist.

Alternativ verbleibt die Lackschicht 18 an der Transferfolie, so daß die Transferfolie 10 mitsamt der Lackschicht 18 von dem erhaltenen Kunststoffteil ablösbar ist, wie in Fig. 10 gezeigt ist. Hier verbleibt die Farbschicht 12 an der Kunststoffschicht 14.

Das Material der Lackschicht 18 und der Transferfolie 10 werden insbesondere hinsichtlich ihrer Adhäsionseigenschaften geeignet gewählt, um wahlweise das Verhalten der Fig. 9 oder in der Fig. 10 zu erreichen.

Die Merkmale der dargestellten Ausführungsbeispiele können miteinander kombiniert werden. Insbesondere können mehrere Lackschichten gleicher oder verschiedener Art im Schichtaufbau vorhanden sein. So kann beispielsweise auch im Schichtaufbau gemäß Fig. 8 eine weitere Lackschicht in Fenstern der Farbschicht 12 vorgesehen sein.

Des weiteren kann beispielsweise eine Lackschicht oberhalb der Farbschicht 12 vorgesehen sein, die beispielsweise ein Anhaften der Farbschicht 12 an der angespritzten Kunststoffschicht 14 unterstützen kann und/oder die Farbschicht 12 während des Anspritzvorgangs stabilisieren kann.

## Patentansprüche

1. Verfahren zur Herstellung eines Kunststoffteils in Form einer Blende für ein Gerät, mit einer von einer vorderseitigen, transparenten Kunststoffschicht (14) bedeckten, durch die vorderseitige transparente Kunststoffschicht (14) sichtbaren, hinter der transparenten Kunststoffschicht (14) angeordneten Farbschicht (12), und mit einer die Farbschicht (12) rückseitig bedeckenden, ablösbaren Schutzfolie, bei welchem Kunststoffteil die transparente Kunststoffschicht (14) eine Produktoberfläche in Form einer einem Benutzer des Geräts zugewandten Vorderseite der Blende bildet, wobei das Verfahren die Schritte aufweist:
- Aufbringen eines Schichtaufbaus auf eine Transferfolie (10), wobei der Schichtaufbau wenigstens eine Farbschicht (12) aufweist, und wobei der Schichtaufbau bereichsweise eine Lackschicht (18) aufweist, wobei die Lackschicht (18) in Bereichen auf die Transferfolie (10) aufgebracht wird, welche Bereiche freigelassenen Bereichen (16) in der wenigstens einen Farbschicht (12) entsprechen;
- Einbringen der Transferfolie (10) mit der Farbschicht (12) in ein Formwerkzeug;
- Verschließen des Formwerkzeugs;
- Anspritzen einer transparenten Kunststoffschicht (14) an den Schichtaufbau, wobei das Anspritzen an diejenige Seite der Transferfolie (10) erfolgt, auf der sich der Schichtaufbau befindet;
- Öffnen des Formwerkzeugs; und
- Entnehmen des erhaltenen Kunststoffteils, **dadurch gekennzeichnet, dass** die Transferfolie (10) mitsamt der Lackschicht (18) von dem erhaltenen Kunststoffteil ablösbar ist.

2. Verfahren nach Anspruch 1, bei dem beim Entnehmen des erhaltenen Kunststoffteils die Transferfolie an dem erhaltenen Kunststoffteil als ablösbare Schutzfolie verbleibt, die die Farbschicht (12) rückseitig bedeckt.

3. Verfahren nach Anspruch 2, bei dem die Transferfolie (10) bis zu einer Weiterverarbeitung des erhaltenen Kunststoffteils als Schutzfolie an dem Kunststoffteil verbleibt.

4. Verfahren nach einem der vorstehenden Ansprüche, wobei das Kunststoffteil eine Blende für ein Gerät ist, bei dem die transparente Kunststoffschicht (14) einen Berührungsschutz für die dahinterliegende Farbschicht (12) bildet.

5. Verfahren nach einem der vorstehenden Ansprüche, wobei der Schichtaufbau durch Bedrucken der Transferfolie (10) aufgebracht wird.

6. Kunststoffteil in Form einer Blende für ein Gerät, aufweisend:
- eine vorderseitige, transparente Kunststoffschicht (14), die eine Produktoberfläche in Form einer einem Benutzer des Geräts zugewandten Vorderseite der Blende bildet;
- wenigstens eine Farbschicht (12), die hinter der transparenten Kunststoffschicht (14) angeordnet ist, von dieser bedeckt ist, und durch diese sichtbar ist;
**dadurch gekennzeichnet, dass** das Kunststoffteil weiter bereichsweise eine Lackschicht (18) aufweist in Bereichen, welche Bereiche freigelassenen Bereichen (16) in der wenigstens einen Farbschicht (12) entsprechen, und dass
das Kunststoffteil weiter eine ablösbare Schutzfolie (10) aufweist, die die Farbschicht (12) rückseitig bedeckt,
wobei die Schutzfolie (10) mitsamt der Lackschicht (18) von dem Kunststoffteil ablösbar ist.

7. Kunststoffteil nach Anspruch 6, wobei das Kunststoffteil eine Bedienplatte bildet und wobei die transparente Kunststoffschicht (14) an der Vorderseite der Bedienplatte angeordnet ist.

8. Gerät mit einer Blende in Form eines Kunststoffteils nach einem der Ansprüche 6 oder 7, wobei die transparente Kunststoffschicht (14) einen Berührungsschutz für die dahinterliegende Farbschicht (12) bildet.

## Claims

1. Method for manufacturing a plastic part in the form of a cover for a device, having a color layer (12) that is covered by a transparent front side plastic layer (14), is visible through the transparent front side plastic layer (14), and is arranged behind the transparent plastic layer (14); and having a detachable protective sheet that covers the rear side of the color layer (12), in which plastic part the transparent plastic layer (14) forms a product surface in the form of a front side of the cover facing a user of the device, wherein the method comprises the steps of:
- depositing a layer structure on a transfer sheet (10), wherein the layer structure comprises at least one color layer (12), and wherein the layer structure comprises a lacquer layer (18) in some areas, wherein the lacquer layer (18) is deposited on the transfer sheet (10) in areas which correspond to areas left out in the at least one color layer (12);
- introducing the transfer sheet (10) with the color layer (12) into a molding tool;
- closing the molding tool;
- injecting a transparent plastic layer (14) upon the layer structure, wherein the transparent plastic layer (14) is injected upon that side of the transfer sheet (10), on which side the layer structure is arranged;
- opening the molding tool; and
- removing the obtained plastic part,
**characterized in that** the transfer sheet (10), together with the lacquer layer (18), is detachable from the obtained plastic part.

2. Method according to claim 1, wherein the transfer sheet remains on the obtained plastic part as a detachable protective sheet that covers the rear side of the color layer (12), when the obtained plastic part is removed.

3. Method according to claim 2, wherein the transfer sheet (10) remains on the obtained plastic part as a protective sheet until a further processing of the plastic part.

4. Method according to any one of the preceding claims, wherein the plastic part is a cover for a device, wherein the transparent plastic layer (14) forms a protection against touching of the color layer (12) arranged behind it.

5. Method according to any one of the preceding claims, wherein the layer structure is deposited by printing on the transfer sheet (10).

6. Plastic part in the form of a cover for a device, comprising:
- a transparent front side plastic layer (14), which forms a product surface in the form of a front side of the cover facing a user of the device;
- at least one color layer (12), which is arranged behind the transparent plastic layer (14), is covered by it, and is visible through it;
**characterized in that** the plastic part further comprises a lacquer layer (18) in some areas, which areas correspond to areas left out in the at least one color layer (12), and **in that**
the plastic part further comprises a detachable protective sheet (10), which covers the rear side of the color layer (12),
wherein the protective sheet (10), together with the lacquer layer (18), is detachable from the plastic part.

7. Plastic part according to claim 6, wherein the plastic part forms a control panel, and wherein the transparent plastic layer (14) is arranged at the front side of the control panel.

8. Device having a cover in the form of a plastic part according to claim 6 or 7, wherein the transparent plastic layer (14) forms a protection against touching of the color layer (12) arranged behind it.

## Revendications

1. Procédé de fabrication d'une pièce en matière plastique ayant la forme d'un cache pour un appareil, comportant une couche de couleur (12) dont la face avant est recouverte d'une couche de matière plastique transparente (14), laquelle couche de couleur est visible à travers la couche de matière plastique transparente avant (14) et disposée derrière la couche de matière plastique transparente (14), et un film protecteur détachable recouvrant la face arrière de la couche de couleur (12), pièce en matière plastique dans laquelle la couche de matière plastique transparente (14) forme une surface de produit se présentant sous la forme d'une face avant du cache dirigée vers un utilisateur de l'appareil, le procédé comportant les étapes consistant à :
- appliquer une structure stratifiée sur un film de transfert (10), la structure stratifiée comportant au moins une couche de couleur (12) et la structure stratifiée comportant, par endroits, une couche de vernis (18), la couche de vernis (18) étant appliquée dans des zones sur le film de transfert (10), lesquelles zones correspondent à des zones inoccupées (16) dans la au moins une couche de couleur (12),
- placer le film de transfert (10) avec la couche de couleur (12) dans un outil de moulage,
- fermer l'outil de moulage,
- injecter une couche de matière plastique transparente (14) sur la structure stratifiée, l'injection étant réalisée du côté du film de transfert (10) sur lequel se trouve la structure stratifiée,
- ouvrir l'outil de moulage, et
- retirer la pièce en matière plastique obtenue,
**caractérisé en ce que** le film de transfert (10) avec la couche de vernis (18) peut être détaché de la pièce en matière plastique obtenue.

2. Procédé selon la revendication 1, dans lequel lors du retrait de la pièce en matière plastique obtenue, le film de transfert faisant office de film protecteur détachable reste sur la pièce en matière plastique obtenue, lequel film de transfert recouvre la face arrière de la couche de couleur (12).

3. Procédé selon la revendication 2, dans lequel le film de transfert (10) faisant office de film protecteur reste sur la pièce en matière plastique jusqu'à un traitement ultérieur de la pièce en matière plastique obtenue.

4. Procédé selon l'une des revendications précédentes, dans lequel la pièce en matière plastique est un cache pour un appareil, dans lequel la couche de matière plastique transparente (14) forme une protection anti-contact pour la couche de couleur (12) située derrière celle-ci.

5. Procédé selon l'une des revendications précédentes, dans lequel la structure stratifiée est appliquée en imprimant le film de transfert (10).

6. Pièce en matière plastique se présentant sous la forme d'un cache pour un appareil, comportant :
- une couche de matière plastique transparente (14) sur la face avant, laquelle couche forme une surface de produit se présentant sous la forme d'une face avant du cache dirigée vers un utilisateur de l'appareil,
- au moins une couche de couleur (12) qui est disposée derrière la couche de matière plastique transparente (14), est recouverte par celle-ci et est visible à travers celle-ci,
**caractérisée en ce que** la pièce en matière plastique comporte de plus, par endroits, une couche de vernis (18) dans des zones correspondant à des zones inoccupées (16) dans la au moins une couche de couleur (12), et **en ce que**
la pièce en matière plastique comporte en outre un film protecteur détachable (10) qui recouvre la face arrière de la couche de couleur (12),
dans laquelle le film protecteur (10) avec la couche de vernis (18) peut être détaché de la pièce en matière plastique.

7. Pièce en matière plastique selon la revendication 6, dans laquelle la pièce en matière plastique forme une plaque de commande et dans laquelle la couche de matière plastique transparente (14) est disposée sur la face avant de la plaque de commande.

8. Appareil muni d'un cache ayant la forme d'une pièce en matière plastique selon l'une des revendications 6 ou 7, dans lequel la couche de matière plastique transparente (14) forme une protection anti-contact pour la couche de couleur (12) située derrière celle-ci.
